# EUROPÄISCHE PATENTSCHRIFT

(11) **EP 2 117 676 B1**
(45) Veröffentlichungstag und Bekanntmachung des Hinweises auf die Patenterteilung: **25.06.2014**
(21) Anmeldenummer: 07822809.5
(22) Anmeldetag: 22.11.2007
(51) Int. Cl.: B01D 53/04, B01J 20/22

(54) **VERFAHREN ZUR TRENNUNG VON GASEN MIT HILFE EINES PORÖSEN METALLORGANISCHEN GERÜSTMATERIALS**
METHOD FOR SEPARATING GASES USING A POROUS METAL ORGANIC FRAMEWORK MATERIAL
PROCÉDÉ DE SÉPARATION DE GAZ À L'AIDE D'UN MATÉRIAU DE CADRE ORGANOMÉTALLIQUE POREUX

(30) Priorität: 24.11.2006 EP 06124720
(43) Veröffentlichungstag der Anmeldung: 18.11.2009
(73) Patentinhaber: BASF SE, 67056 Ludwigshafen (DE)
(72) Erfinder: SCHUBERT, Markus, 67063 Ludwigshafen (DE); MÜLLER, Ulrich, 67435 Neustadt (DE); KIENER, Christoph, 67256 Weisenheim am Sand (DE)
(86) Internationale Anmeldenummer: PCT/EP2007/062682
(87) Internationale Veröffentlichungsnummer: WO 2008/062034

(56) Entgegenhaltungen:
- EP-A- 1 070 538
- EP-A- 1 674 555
- WO-A-2006/072573
- ANDREW R MILLWARD ET AL: "Metal-Organic Frameworks with Exceptionally High Capacity for Storage of Carbon Dioxide at Room Temperature" JOURNAL OF THE AMERICAN CHEMICAL SOCIETY, AMERICAN CHEMICAL SOCIETY, WASHINGTON, DC, US, Bd. 127, 12. Januar 2005 (2005-01-12), Seiten 17998-17999, XP007904150 ISSN: 0002-7863 & ANDREW R MILLWARD ET AL: "SUPPORTING INFORMATION" JOURNAL OF THE AMERICAN CHEMICAL SOCIETY, 12. Januar 2005 (2005-01-12), XP007904269 Washington, DC
- BANGLIN CHEN ET AL: "High H2 Adsorption in a Microporous Metal-Organic Framework with Open Metal Sites" ANGEW. CHEM. INT. ED., Bd. 44, 2005, Seiten 4745-4749, XP007904276 Weinheim & BANGLIN CHEN ET AL: "Supporting Infromation" ANGEW. CHEM. INT. ED., 2005, Seiten 1-25, XP007904274

## Beschreibung

Die vorliegende Erfindung betrifft ein Verfahren zur Trennung einer Gaskomponente aus einem Gasgemisch.

Für die Trennung bestimmter Komponenten aus einem Gasgemisch sind zahlreiche Verfahren bekannt. Hierbei haben sich insbesondere adsorptive Verfahren bewährt.

Die Trennung erfolgt hierbei durch bevorzugte Adsorption einer bestimmten Komponente des Gasgemisches an dem Adsorbens, wodurch die besagte Komponente im Gasgemisch abgereichert und durch Desorption erhalten werden kann.

Gängige Adsorptionsmittel für die Trennung einer Komponente aus einem Gasgemisch sind beispielsweise Aktivkohle, Tonerden oder Zeolithe.

Eine interessante Klasse von Adsorbentien für die Trennung stellen poröse metallorganische Gerüstmaterialien dar.

Das metallorganische Gerüstmaterial enthält typischerweise eine mindestens zweizähnige organische Verbindung, die koordinativ an ein Metallion derart gebunden ist, dass ein Gerüst aufgebaut werden kann, welches sich entweder unendlich erstreckt oder sich in Form von Polyedern ausbildet.

Die Trennung von Gasen mit Hilfe von metallorganischen Gerüstmaterialien ist ebenfalls im Stand der Technik bekannt.

EP-A 1 070 538 beschreibt beispielsweise die Gastrennung und Reinigung von Kohlendioxid, Wasser, Stickoxiden und Kohlenwasserstoffen aus Gasströmen mit Hilfe von metallorganischen Gerüstmaterialien.

In WO-A 2006/072573 wird die adsorptive Gewinnung von Xenon aus Krypton-Xenon-Gasgemischen beschrieben.

Die adsorptive Anreicherung von Methan in Methan-haltigen Gasgemischen wird in EP-A 1 674 555 offenbart.

Die Abtrennung von Kohlendioxid mit Hilfe eines speziellen Aluminium-Gerüstmaterials ist in der Europäischen Patentanmeldung mit der Anmeldenummer 06 123 200.5 beschrieben.

Die Abtrennung von Propen aus einem Gasgemisch durch metallorganische Gerüstmaterialien ist in der Europäischen Patentanmeldung mit der Anmeldenummer 06 111 918.6 beschrieben.

B. Chen et al., Angew. Chem. Int. Ed. 44 (2005), 4745-4749, beschreiben die Wasser-stoffadsorption in mikroporösen metallorganischen Gerüstmaterialien.

Trotz der im Stand der Technik bekannten Trennverfahren durch Adsorption einer Gaskomponente aus einem Gasgemisch mit Hilfe metallorganischer Gerüstmaterialien besteht ein Bedarf an weiter optimierten Verfahren.

Eine Aufgabe der vorliegende Erfindung liegt somit darin, ein solches optimiertes Verfahren bereitzustellen.

Die Aufgabe wird gelöst durch ein Verfahren zur Trennung einer Gaskomponente aus einem Gasgemisch, welches die Gaskomponente enthält, die Schritte enthaltend
(a) Inkontaktbringen des Gasgemisches mit mindestens einem Sorbens enthaltend ein poröses metallorgänisches Gerüstmaterial, wobei das Gerüstmaterial die Gaskomponente aufnimmt und mindestens eine an mindestens ein Metallion koordinativ gebundene, mindestens zweizähnige organische Verbindung enthält und
(b) Desorption der Gaskomponente,
wobei vor Schritt (a) das poröse metallorganische Gerüstmaterial durch Druckreduktion mit einem reduzierten Druck von 500 mbar oder weniger ohne Temperaturerhöhung aktiviert wird, wobei das Gasgemisch Erdgas ist und wobei die Zeitspanne zwischen dem Ende der Aktivierung und Schritt (a) weniger als 3 Stunden beträgt.

Es wurde nämlich gefunden, dass die Trennleistungen des porösen metallorganischen Gerüstmaterials durch dessen Aktivierung gesteigert werden kann, ohne dass eine erhöhte Reaktivität sich nachteilig auf die Trenngüte auswirkt.

Hierbei hat sich gezeigt, dass die Aktivierung mit der Desorption von in der Luft befindlichen Bestandteilen, welche durch das metallorganische Gerüstmaterial aufgenommen wurden, erfolgt. Hierbei sind insbesondere gasförmiges Wasser und Kohlendioxid zu nennen.

Die Vermeidung einer solchen Kontamination durch Luftbestandteile ist insbesondere bei der technischen Trennmittelproduktion nur mit sehr viel Aufwand möglich, so dass die damit verbundene nachteilige Beeinträchtigung der Trennkapazität und Selektivität aufgrund der Aktivierung vermieden werden kann.

Die Aktivierung erfolgt durch Druckreduktion.

Die Druckreduktionen beinhalten einen reduzierten Druck (Druckdifferenz zum Normaldruck) von 500 mbar oder weniger, vorzugsweise von 250 mbar oder weniger, weiter bevorzugt von 100 mbar oder weniger, weiter bevorzugt von 10 mbar oder weniger.

Darüber hinaus kann die Aktivierung in Gegenwart eines Spülgases erfolgen.

Die Verwendung eines Spülgases kann mit der Aktivierung durch Druckerniedrigung kombiniert werden.

Geeignete Spülgase sind getrocknete Luft, Erdgas, insbesondere Methan oder Inertgase wie Stickstoff, Helium. Neon, Argon oder Mischungen davon. Prinzipiell eignet sich auch das Gasgemisch als solches, sofern dieses insbesondere die Verdrängung von Wasser und/oder Kohlendioxid ermöglicht. Vorzugsweise sollen die Spülgase die zu entfernenden Substanzen nicht enthalten.

Die Aktivierung erfolgt vorzugsweise so lange, bis der gewünschte Maximalanteil an störenden Substanzen im metallorganischen Gerüstmaterial, insbesondere Wasser und Kohlendioxid, unterschritten wird.

Analytisch kann der Fortgang der Aktivierung beispielsweise über eine Analyse der Gasphasenkonzentration erfolgen, beispielsweise mittels Gaschromatographie oder IR. Alternativ oder ergänzend kann die Analyse durch Probenahme und separate Analyse, beispielsweise thermogravimetrisch, erfolgen.

Vorzugsweise liegt der Maximalanteil bei ≤ 2 Gew.-% bezogen auf die Gesamtmasse des metallorganischen Gerüstmaterials, weiter bevorzugt ≤ 1 Gew.-%, weiter bevorzugt ≤ 0,5 Gew.-%, weiter bevorzugt ≤ 0,1 Gew.-%. Insbesondere erfolgt ein vollständiges Entfernen.

Bevorzugt dauert die Aktivierung von 0,5 Stunden bis 5 Tage. Vorzugsweise beträgt die Dauer 1 Stunde bis 48 Stunden, weiter mehr bevorzugt 2 Stunden bis 24 Stunden und insbesondere 3 Stunden bis 12 Stunden.

Es muss selbstverständlich Sorge dafür getragen werden, dass die durch Aktivierung zu entfernenden Substanzen in das über dem metallorganischen Gerüstmaterial befindliche Gas eintreten und abtransportiert werden kann. Dies kann beispielsweise durch einen Gasstrom oder durch Anlegen eines Unterdrucks erfolgen.

Die Gaskomponente, die aus dem Gasgemisch abgetrennt werden soll, kann ein Gas oder mehrere Gase umfassen.

Bei dem Gasgemisch handelt es sich um Erdgas.

Besonders bevorzugte Trennungen betreffen die Trennung von höheren Kohlenwasserstoffen von Erdgas; CO₂ von Erdgas.

Das in Kontaktbringen des Gasgemisches wird bevorzugt durch kontinuierliche Adsorption an einem Festbett durchgeführt. Hierbei wird das Gasgemisch durch das Sorptionsbett durchgeleitet. Weiterhin bevorzugt findet die kontinuierliche Adsorption in einem oder mehreren Schacht- oder Rohrbündelreaktoren, insbesondere in einem oder zwei Schachtreaktoren, statt, wobei mindestens ein Reaktor mit einem Adsorbens gefüllt ist, das ein poröses metallorganisches Gerüstmaterial enthält. Es sind ebenfalls Reaktorkaskaden denkbar. Ein Reaktor kann eine Teilfüllung mit porösem metallorganischem Gerüstmaterial oder ein Kombibett beispielsweise mit zusätzlichen anderen Adsorbentien enthalten. Eine Temperaturerhöhung für die Aktivierung kann durch Erhitzen des Reaktors (elektrisch, Wasserdampf etc.) oder gegebenenfalls durch Aufheizen des Spülgases oder durch Aufheizen eines Kreisstromes beispielsweise durch Wärmetauscher erfolgen.

Die Zeitspanne zwischen dem Ende der Aktivierung und Schritt (a) des erfindungsgemäßen Verfahrens beträgt weniger als 3 Stunden, bevorzugt weniger als 1 Stunde, weiterhin mehr bevorzugt weniger als 0,5 Stunden.

Schritt (a) des erfindungsgemäßen Verfahrens wird vorzugsweise bei einem Druck durchgeführt, der im Bereich von 1 bar (Atmosphärendruck) bis 325 bar liegt. Besonders bevorzugt liegt der Druck in einem Bereich von 1 bar bis 250 bar, insbesondere zwischen 1 und 100 bar und am meisten bevorzugt zwischen 1 und 80 bar.

Die Temperatur des Gasgemisches beim Inkontaktbringen mit dem Sorbens, welches ein poröses metallorganisches Gerüstmaterial enthält, beträgt vorzugsweise etwa Raumtemperatur. Sowohl höhere als auch niedrigere Temperaturen können jedoch angewandt werden. So sind auch Temperaturen aus einem Bereich von -50°C bis + 200°C denkbar. Eine typische Temperatur liegt im Bereich von -20°C bis +150°C, vorzugsweise von 0°C bis 70°C, insbesondere 10°C bis 50°C.

Das Gasgemisch wird vorzugsweise mit einer volumenbezogenen Flussrate pro Adsorbensvolumen (GHSV = Gas Hourly Space Velocity) von 250 Nl/h bis 10000 Nl/h, besonders bevorzugt von 250 Nl/h bis 2500 Nl/h mit dem Sorbens in Kontakt gebracht.

Das Gasgemisch kann mit dem ein poröses metallorganisches Gerüstmaterial enthaltenden Sorbens einmalig in Kontakt gebracht werden oder mehrmals. Vorzugsweise werden mehrere Zyklen durchgeführt. Hierbei wird nach dem Inkontaktbringen das bereits mit der Gaskomponente abgereicherte Gasgemisch nochmals mit dem Sorbens in Kontakt gebracht. Hierdurch kann eine erhöhte Anreicherung erzielt werden.

Die Desorption in Schritt (b) des erfindungsgemäßen Verfahrens des abgetrennten und sich auf dem Adsorbens befindlichen Gases oder Gasgemisches (Gaskomponente) kann mittels Druck- (Absolut- oder Partialdruck) bzw. Temperaturänderung und/oder Verdrängungsadsorption erfolgen. Vorzugsweise findet die Desorption unter Druckänderung statt. Die Art und Weise, wie eine Desorption durchgeführt werden kann, ist dem Fachmann bekannt. Anleitungen hierzu finden sich beispielsweise in Werner Kast, "Adsorption aus der Gasphase", Verlag VCH, Weinheim, 1988.

Das poröse metallorganische Gerüstmaterial enthält mindestens eine an mindestens ein Metallion koordinativ gebundene mindestens zweizähnige organische Verbindung. Dieses metallorganische Gerüstmaterial (MOF) wird beispielsweise beschrieben in US 5,648,508, EP-A-0 790 253, M. O. Keeffe et al., J. Sol. State Chem., 152 (2000), Seite 3 bis 20, H. Li et al., Nature 402, (1999), Seite 276, M. Eddaoudi et al., Topics in Catalysis 9, (1999), Seite 105 bis 111, B. Chen et al., Science 291, (2001), Seite 1021 bis 1023 und DE-A-101 11 230.

Die metallorganischen Gerüstmaterialien gemäß der vorliegenden Erfindung enthalten Poren, insbesondere Mirko- und/oder Mesoporen. Mikroporen sind definiert als solche mit einem Durchmesser von 2 nm oder kleiner und Mesoporen sind definiert durch einen Durchmesser im Bereich von 2 bis 50 nm, jeweils entsprechend nach der Definition, wie sie Pure & Applied Chem. 57 (1983), 603 - 619, insbesondere auf Seite 606 angegeben ist. Die Anwesenheit von Mikro- und/oder Mesoporen kann mit Hilfe von Sorptionsmessungen überprüft werden, wobei diese Messungen die Aufnahmekapazität der MOF für Stickstoff bei 77 Kelvin gemäß DIN 66131 und/oder DIN 66134 bestimmt.

Vorzugsweise beträgt die spezifische Oberfläche - berechnet nach dem Langmuir-Modell (DIN 66131, 66134) für ein MOF in Pulverform bei mehr als 5 m²/g, mehr bevorzugt über 10 m²/g, mehr bevorzugt mehr als 50 m²/g, weiter mehr bevorzugt mehr als 500 m²/g, weiter mehr bevorzugt mehr als 1000 m²/g und besonders bevorzugt mehr als 1500 m²/g.

Formkörper enthaltend metallorganische Gerüstmaterialien können eine niedrigere aktive Oberfläche besitzen; vorzugsweise jedoch mehr als 10 m²/g, mehr bevorzugt mehr als 50 m²/g, weiter mehr bevorzugt mehr als 500 m²/g.

Die Metallkomponente im Gerüstmaterial nach der vorliegenden Erfindung ist vorzugsweise ausgewählt aus den Gruppen la, IIa, IIIa, IVa bis VIIIa und Ib bis Vlb. Besonders bevorzugt sind Mg, Ca, Sr, Ba, Sc, Y, Ln, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, Tl, Si, Ge, Sn, Pb, As, Sb und Bi, wobei Ln für Lanthanoide steht. Lanthanoide sind La, Ce, Pr, Nd, Pn, Sm, En, Gd, Teilbereich, Dy, Ho, Er, Tm, Yb. In Bezug auf die Ionen dieser Elemente sind besonders zu erwähnen Mg²⁺, Ca²⁺, Sr²⁺, Ba²⁺, Sc³⁺, Y³⁺, Ln³⁺, Ti⁴⁺, Zr⁴⁺, Hf⁴⁺, V⁴⁺, V³⁺, V²⁺, Nb³⁺, Ta³⁺, Cr³⁺, Mo³⁺, W³⁺, Mn³⁺, Mn²⁺, Re³⁺, Re²⁺, Fe³⁺, Fe²⁺, Ru³⁺, Ru²⁺, Os³⁺, Os²⁺, Co³⁺, Co²⁺, Rh²⁺, Rh⁺, Ir²⁺, Ir⁺, Ni²⁺ , Ni⁺, Pd²⁺, Pd⁺, Pt²⁺, Pt⁺, Cu²⁺, Cu⁺, Ag⁺, Au⁺, Zn²⁺, Cd²⁺, Hg²⁺, Al³⁺, Ga³⁺, In³⁺, Tl³⁺, Si⁴⁺, Si²⁺, Ge⁴⁺, Ge²⁺, Sn⁴⁺, Sn²⁺, Pb⁴⁺, Pb²⁺, As⁵⁺, As³⁺, As⁺, Sb⁵⁺, Sb³⁺, Sb⁺, Bi⁵⁺, Bi³⁺ und Bi⁺.

Mehr bevorzugte Metalle sind Zn, Cu, Al, V, Mn, Ln, Y, Sc, Mg. Zr, Ti, Fe, Co, Ni, In, Ga, Ca. Weiter mehr bevorzugt sind Al, Zn, Cu, Zr.

Der Begriff "mindestens zweizähnige organische Verbindung" bezeichnet eine organische Verbindung, die mindestens eine funktionelle Gruppe enthält, die in der Lage ist, zu einem gegebenen Metallion mindestens zwei koordinative Bindungen, und/oder zu zwei oder mehr, bevorzugt zwei Metallatomen jeweils eine koordinative Bindung auszubilden.

Als funktionelle Gruppen, über die die genannten koordinativen Bindungen ausgebildet werden kann, sind insbesondere beispielsweise folgende funktionellen Gruppen zu nennen: -CO₂H, -CS₂H, -NO₂, -B(OH)₂, -SO₃H, -Si(OH)₃, -Ge(OH)₃, -Sn(OH)₃, -Si(SH)₄, -Ge(SH)₄, -Sn(SH)₃, -PO₃H, -AsO₃H, -AsO₄H, -P(SH)₃, -As(SH)₃, -CH(RSH)₂, -C(RSH)₃ -CH(RNH₂)₂ -C(RNH₂)₃, -CH(ROH)₂, -C(ROH)₃, -CH(RCN)₂, -C(RCN)₃ wobei R beispielsweise bevorzugt eine Alkylengruppe mit 1, 2, 3, 4 oder 5 Kohlenstoffatomen wie beispielsweise eine Methylen-, Ethylen-, n-Propylen-, i-Propylen, n-Butylen-, i-Butylen-, tert-Butylen- oder n-Pentylengruppe, oder eine Arylgruppe, enthaltend 1 oder 2 aromatische Kerne wie beispielsweise 2 C₆-Ringe, die gegebenenfalls kondensiert sein können und unabhängig voneinander mit mindestes jeweils einem Substituenten geeignet substituiert sein können, und/oder die unabhängig voneinander jeweils mindestens ein Heteroatom wie beispielsweise N, O und/oder S enthalten können. Gemäß ebenfalls bevorzugter Ausführungsformen sind funktionelle Gruppen zu nennen, bei denen der oben genannte Rest R nicht vorhanden ist. Diesbezüglich sind unter anderem -CH(SH)₂, -C(SH)₃, -CH(NH₂)₂, -C(NH₂)₃, -CH(OH)₂, -C(OH)₃, -CH(CN)₂ oder-C(CN)₃zu nennen.

Die mindestens zwei funktionellen Gruppen können grundsätzlich an jede geeignete organische Verbindung gebunden sein, solange gewährleistet ist, dass die diese funktionellen Gruppen aufweisende organische Verbindung zur Ausbildung der koordinativen Bindung und zur Herstellung des Gerüstmaterials befähigt ist.

Bevorzugt leiten sich die organischen Verbindungen, die die mindestens zwei funktionellen Gruppen enthalten, von einer gesättigten oder ungesättigten aliphatischen Verbindung oder einer aromatischen Verbindung oder einer sowohl aliphatischen als auch aromatischen Verbindung ab.

Die aliphatische Verbindung oder der aliphatische Teil der sowohl aliphatischen als auch aromatischen Verbindung kann linear und/oder verzweigt und/oder cyclisch sein, wobei auch mehrere Cyclen pro Verbindung möglich sind. Weiter bevorzugt enthält die aliphatische Verbindung oder der aliphatische Teil der sowohl aliphatischen als auch aromatischen Verbindung 1 bis 15, weiter bevorzugt 1 bis 14, weiter bevorzugt 1 bis 13, weiter bevorzugt 1 bis 12, weiter bevorzugt 1 bis 11 und insbesondere bevorzugt 1 bis 10 C-Atome wie beispielsweise 1, 2, 3, 4, 5, 6, 7, 8, 9 oder 10 C-Atome. Insbesondere bevorzugt sind hierbei unter anderem Methan, Adamantan, Acetylen, Ethylen oder Butadien.

Die aromatische Verbindung oder der aromatische Teil der sowohl aromatischen als auch aliphatischen Verbindung kann einen oder auch mehrere Kerne wie beispielsweise zwei, drei, vier oder fünf Kerne aufweisen, wobei die Kerne getrennt voneinander und/oder mindestens zwei Kerne in kondensierter Form vorliegen können. Besonders bevorzugt weist die aromatische Verbindung oder der aromatische Teil der sowohl aliphatischen als auch aromatischen Verbindung einen, zwei oder drei Kerne auf, wobei einer oder zwei Kerne besonders bevorzugt sind. Unabhängig voneinander kann weiter jeder Kern der genannten Verbindung mindestens ein Heteroatom wie beispielsweise N, O, S, B, P, Si, Al, bevorzugt N, O und/oder S enthalten. Weiter bevorzugt enthält die aromatische Verbindung oder der aromatische Teil der sowohl aromatischen als auch aliphatischen Verbindung einen oder zwei C₆-Kerne, wobei die zwei entweder getrennt voneinander oder in kondensierter Form vorliegen. Insbesondere sind als aromatische Verbindungen Benzol, Naphthalin und/oder Biphenyl und/oder Bipyridyl und/oder Pyridyl zu nennen.

Mehr bevorzugt ist die mindestens zweizähnige organische Verbindung, ein aliphatischer oder aromatischer, acyclischer oder cyclischer Kohlenwasserstoff mit 1 bis 18, vorzugsweise 1 bis 10 und insbesondere 6 Kohlenstoffatomen, der zudem ausschließlich 2, 3 oder 4 Carboxylgruppen als funktionelle Gruppen aufweist.

Beispielsweise leitet sich die mindestens zweizähnige organische Verbindung von einer Dicarbonsäure ab, wie etwa Oxalsäure, Bernsteinsäure, Weinsäure, 1,4-Butandicarbonsäure, 1,4-Butendicarbonsäure, 4-Oxo-Pyran-2,6-dicarbonsäure, 1,6-Hexandicarbonsäure, Decandicarbonsäure, 1,8-Heptadecandicarbonsäure, 1,9-Heptadecandicarbonsäure, Heptadecandicarbonsäure, Acetylendicarbonsäure, 1,2-Benzoldicarbonsäure, 1,3-Benzoldicarbonsäure, 2,3-Pyridindicarbonsäure, Pyridin-2,3-dicarbonsäure, 1,3-Butadien-1,4-dicarbonsäure, 1,4-Benzoldicarbonsäure, p-Benzoldicarbonsäure, Imidazol-2,4-dicarbonsäure, 2-Methylchinolin-3,4-dicarbonsäure, Chinolin-2,4-dicarbonsäure, Chinoxalin-2,3-dicarbonsäure, 6-Chlorchinoxalin-2,3-dicarbon-säure, 4,4'-Diaminphenylmethan-3,3'-dicarbonsäure, Chinolin-3,4-dicarbonsäure, 7-Chlor-4-hydroxychinolin-2,8-dicarbonsäure, Diimiddicarbonsäure, Pyridin-2,6-dicarbonsäure, 2-Methylimidazol-4,5-dicarbonsäure, Thiophen-3,4-dicarbonsäure, 2-Isopropylimidazol-4,5-dicarbonsäure, Tetrahydropyran-4,4-dicarbonsäure, Perylen-3,9-dicarbonsäure, Perylendicarbonsäure, Pluriol E 200-dicarbonsäure, 3,6-Dioxaoctandicarbonsäure, 3,5-Cyclohexadien-1,2-dicarbonsäure, Octadicarbonsäure, Pentan-3,3-carbonsäure, 4,4'-Diamino-1,1'-diphenyl-3,3'-dicarbonsäure, 4,4'-Diaminodiphenyl-3,3'-dicarbonsäure, Benzidin-3,3'-dicarbonsäure, 1,4-Bis-(phenylamino)-benzol-2,5-dicarbonsäure, 1,1'-Dinaphthyldicarbonsäure, 7-Chlor-8-methylchinolin-2,3-dicarbonsäure, 1-Anilinoanthrachinon-2,4'-dicarbonsäure, Polytetrahydrofuran-250-dicarbonsäure, 1,4-Bis-(carboxymethyl)-piperazin-2,3-dicarbonsäure, 7-Chlorchinolin-3,8-dicarbonsäure, 1-(4-Carboxy)-phenyl-3-(4-chlor)-phenylpyrazolin-4,5-dicarbonsäure, 1,4,5,6,7,7,-Hexachlor-5-norbornen-2,3-dicarbonsäure, Phenylindandicarbonsäure, 1,3-Dibenzyl-2-oxoimidazolidin-4,5-dicarbonsäure, 1,4-Cyclohexandicarbonsäure, Naphthalin-1,8-dicarbonsäure, 2-Benzoylbenzol-1,3-dicarbonsäure, 1,3-Dibenzyl-2-oxoimidazolidin-4,5-cis-dicarbonsäure, 2,2'-Bichinolin-4,4'-dicarbonsäure, Pyridin-3,4-dicarbonsäure, 3,6,9-Trioxaundecandicarbonsäure, Hydroxybenzophenondicarbonsäure, Pluriol E 300-dicarbonsäure, Pluriol E 400-dicarbonsäure, Pluriol E 600-dicarbonsäure, Pyrazol-3,4-dicarbonsäure, 2,3-Pyrazindicarbonsäure, 5,6-Dimethyl-2,3-pyrazindicarbonsäure, 4,4'-Diaminodiphenyletherdiimiddicarbonsäure, 4,4'-Diaminodiphenylmethandiimiddicarbonsäure, 4,4'-Diaminodiphenylsulfondiimiddicarbonsäure, 1,4-Naphthalindicarbonsäure, 2,6-Naphthalindicarbonsäure, 1,3-Adamantandicarbonsäure, 1,8-Naphthalindicarbonsäure, 2,3-Naphthalindicarbonsäure, 8-Methoxy-2,3-naphthalindicarbonsäure, 8-Nitro-2,3-naphthalincarbonsäure, 8-Sulfo-2,3-naphthalindicarbonsäure, Anthracen-2,3-dicarbonsäure, 2',3'-Diphenyl-p-terphenyl-4,4"-dicarbonsäure, Diphenylether-4,4'-dicarbonsäure, Imidazol-4,5-dicarbonsäure, 4(1 H)-Oxothiochromen-2,8-dicarbonsäure, 5-tert-Butyl-1,3-benzoldicarbonsäure, 7,8-Chinolindicarbonsäure, 4,5-Imidazoldicarbonsäure, 4-Cyclohexen-1,2-dicarbonsäure, Hexatriacontandicarbonsäure, Tetradecandicarbonsäure, 1,7-Heptadicarbonsäure, 5-Hydroxy-1,3-Benzoldicarbonsäure, 2,5-Di-hydroxy-1,4-dicarbonsäure, Pyrazin-2,3-dicarbonsäure, Furan-2,5-dicarbonsäure, 1-Nonen-6,9-dicarbonsäure, Eicosendicarbonsäure, 4,4'-Dihydroxydiphenylmethan-3,3'-dicarbonsäure, 1-Amino-4-methyl-9,10-dioxo-9,10-dihydroanthracen-2,3-dicarbonsäure, 2,5-Pyridindicarbonsäure, Cyclohexen-2,3-dicarbonsäure,2,9-Dichlorfluorubin-4,11-dicarbonsäure, 7-Chlor-3-methylchinolin-6,8-dicarbonsäure, 2,4-Dichlorbenzophenon-2',5'-dicarbonsäure, 1,3-Benzoldicarbonsäure, 2,6-Pyridindicarbonsäure, 1-Methylpyrrol-3,4-dicarbonsäure, 1-Benzyl-1 H-pyrrol-3,4-dicarbonsäure, Anthrachinon-1,5-dicarbonsäure, 3,5-Pyrazoldicarbonsäure, 2-Nitrobenzol-1,4-dicarbonsäure, Heptan-1,7-dicarbonsäure, Cyclobutan-1,1-dicarbonsäure 1,14-Tetradecandicarbonsäure, 5,6-Dehydronorbornan-2,3-dicarbonsäure, 5-Ethyl-2,3-pyridindicarbonsäure oder Campherdicarbonsäure,

Weiterhin mehr bevorzugt handelt es sich bei der mindestens zweizähnigen organischen Verbindung um eine der oben beispielhaft genannten Dicarbonsäure als solche.

Beispielsweise kann sich die mindestens zweizähnige organische Verbindung von einer Tricarbonsäure ableiten, wie etwa
2-Hydroxy-1,2,3-propantricarbonsäure, 7-Chlor-2,3,8-chinolintricarbonsäure, 1,2,3-, 1,2,4-Benzoltricarbonsäure, 1,2,4-Butantricarbonsäure, 2-Phosphono-1,2,4-butantricarbonsäure, 1,3,5-Benzoltricarbonsäure, 1-Hydroxy-1,2,3-Propantricarbonsäure, 4,5-Dihydro-4,5-dioxo-1 H-pyrrolo[2,3-F]chinolin-2,7,9-tricarbonsäure, 5-Acetyl-3-amino-6-methylbenzol-1,2,4-tricarbonsäure, 3-Amino-5-benzoyl-6-methylbenzol-1,2,4-tricarbon-+säure, 1,2,3-Propantricarbonsäure oder Aurintricarbonsäure,

Weiterhin mehr bevorzugt ist die mindestens zweizähnige organische Verbindung einer der oben beispielhaft genannten Tricarbonsäuren als solche.

Beispiele für eine mindestens zweizähnige organische Verbindung, die sich von einer Tetracarbonsäure ableitet, sind
1,1-Dioxidperylo[1,12-BCD]thiophen-3,4,9,10-tetracarbonsäure, Perylentetracarbonsäuren wie Perylen-3,4,9,10-tetracarbonsäure oder Perylen-1,12-sulfon-3,4,9,10-tetracarbonsäure, Butantetracarbonsäuren wie 1,2,3,4-Butantetracarbonsäure oder Meso-1,2,3,4-Butantetracarbonsäure, Decan-2,4,6,8-tetracarbonsäure, 1,4,7,10,13,16-Hexaoxacyclooctadecan-2,3,11,12-tetracarbonsäure, 1,2,4,5-Benzoltetracarbonsäure, 1,2,11,12-Dodecantetracarbonsäure, 1,2,5,6-Hexan-tetracarbonsäure, 1,2,7,8-Octantetracarbonsäure, 1,4,5,8-Naphthalintetracarbonsäure, 1,2,9,10-Decantetracarbonsäure, Benzophenontetracarbonsäure, 3,3',4,4'-Benzo-phenontetracarbonsäure, Tetrahydrofurantetracarbonsäure oder Cyclopentantetracarbonsäuren wie Cyclopentan-1,2,3,4-tetracarbonsäure.

Weiterhin mehr bevorzugt handelt es sich bei der mindestens zweizähnigen organischen Verbindung um eine der oben beispielhaft genannten Tetracarbonsäuren als solche.

Ganz besonders bevorzugt werden gegebenenfalls mindestens einfach substituierte mono-, di-, tri-, tetra- oder höherkernige aromatische Di-, Tri- oder Tetracarbonsäuren eingesetzt, wobei jeder der Kerne mindestens ein Heteroatom enthalten kann, wobei zwei oder mehr Kerne gleiche oder unterschiedliche Heteroatome enthalten kann. Beispielsweise bevorzugt werden monokernige Dicarbonsäuren, monokernige Tricarbonsäuren, monokernige Tetracarbonsäuren, dikernige Dicarbonsäuren, dikernige Tricarbonsäuren, dikernige Tetracarbonsäuren, trikernige Dicarbonsäuren, trikernige Tricarbonsäuren, trikernige Tetracarbonsäuren, tetrakernige Dicarbonsäuren, tetrakernige Tricarbonsäuren und/oder tetrakernige Tetracarbonsäuren. Geeignete Heteroatome sind beispielsweise N, O, S, B, P bevorzugte Heteroatome sind hierbei N, S und/oder O. Als geeigneter Substituent ist diesbezüglich unter anderem -OH, eine Nitrogruppe, eine Aminogruppe oder eine Alkyl- oder Alkoxygruppe zu nennen.

Insbesondere bevorzugt werden als mindestens zweizähnige organische Verbindungen Imidazolate, wie 2-Methylimidazolat, Acetylendicarbonsäure (ADC), Campherdicarbonsäure, Fumarsäure, Bemsteinsäure, Benzoldicarbonsäuren wie Phthalsäure, Isophthalsäure, Terephthalsäure (BDC), Aminoterephthaläure, Triethylendiamin (TE-DA), Naphthalindicarbonsäuren (NDC), Biphenyldicarbonsäuren wie beispielsweise 4,4'-Biphenyldicarbonsäure (BPDC), Pyrazindicarbonsäuren, wie 2,5-Pyrazindicarbonsäure, Bipyridindicarbonsäuren wie beispielsweise 2,2'-Bipyridindicarbonsäuren wie beispielsweise 2,2'-Bipyridin-5,5'-dicarbonsäure, Benzoltricarbonsäuren wie beispielsweise 1,2,3-, 1,2,4-Benzoltricarbonsäure oder 1,3,5-Benzoltricarbonsäure (BTC), Benzoltetracarbonsäure, Adamantantetracarbonsäure (ATC), Adamantandibenzoat (ADB) Benzoltribenzoat (BTB), Methantetrabenzoat (MTB), Adamantantetrabenzoat oder Dihydroxyterephthalsäuren wie beispielsweise 2,5-Dihydroxyterephthalsäure (DHBDC) eingesetzt.

Ganz besonders bevorzugt werden unter anderem Phthalsäure, Isophthalsäure, Terephthalsäure, 2,6-Naphthalindicarbonsäure, 1,4-Naphthalindicarbonsäure, 1,5-Naphthalindicarbonsäure, 1,2,3-Benzoltricarbonsäure, 1,2,4-Benzoltricarbonsäure, 1,3,5-Benzoltricarbonsäure, 1,2,4,5-Benzoltetracarbonsäure, AminoBDC, TEDA, Fumarsäure, 2-Methylimidazolat, Biphenyldicarboxylat.

Neben diesen mindestens zweizähnigen organischen Verbindungen kann das metallorganische Gerüstmaterial auch einen oder mehrere einzähnige Liganden und/oder einen oder mehrere mindestens zweizähnige Liganden, die sich nicht von einer Di-, Tri- oder Tetracarbonsäure ableiten, umfassen.

Neben diesen mindestens zweizähnigen organischen Verbindungen kann der MOF auch eine oder mehrere einzähnige Liganden umfassen.

Geeignete Lösemittel zur Herstellung der MOF sind u.a. Ethanol, Dimethylformamid, Toluol, Methanol, Chlorbenzol, Diethylformamid, Dimethylsulfoxid, Wasser, Wasserstoffperoxid, Methylamin, Natronlauge, N-Methylpyrrolidon, Ether, Acetonitril, Benzyl-chlorid, Triethylamin, Ethylenglykol und Gemische hiervon. Weitere Metallionen, mindestens zweizähnige organische Verbindungen und Lösemittel für die Herstellung von MOF sind u.a. in US-A 5,648,508 oder DE-A 101 11 230 beschrieben.

Die Porengröße des metallorganischen Gerüstmaterials kann durch Wahl des geeigneten Liganden und/oder der mindestens zweizähnigen organischen Verbindung gesteuert werden. Allgemein gilt, dass je größer die organische Verbindung desto größer die Porengröße ist. Vorzugsweise beträgt die Porengröße von 0,2 nm bis 30 nm, besonders bevorzugt liegt die Porengröße im Bereich von 0,3 nm bis 3 nm bezogen auf das kristalline Material.

In einem Formkörper enthaltend ein metallorganisches Gerüstmaterial treten jedoch auch größere Poren auf, deren Größenverteilung variieren kann. Vorzugsweise wird jedoch mehr als 50 % des gesamten Porenvolumens, insbesondere mehr als 75 %, von Poren mit einem Porendurchmesser von bis zu 1000 nm gebildet. Vorzugsweise wird jedoch ein Großteil des Porenvolumens von Poren aus zwei Durchmesserbereichen gebildet. Es ist daher weiter bevorzugt, wenn mehr als 25 % des gesamten Porenvolumens, insbesondere mehr als 50 % des gesamten Porenvolumens von Poren gebildet wird, die in einem Durchmesserbereich von 100 nm bis 800 nm liegen und wenn mehr als 15 % des gesamten Porenvolumens, insbesondere mehr als 25 % des gesamten Porenvolumens von Poren gebildet wird, die in einem Durchmesserbereich oder bis zu 10 nm liegen. Die Porenverteilung kann mittels Quecksilber-Porosimetrie bestimmt werden.

Nachfolgend sind Beispiele für metallorganische Gerüstmaterialien angegeben. Neben der Kennzeichnung des Gerüstmaterials, dem Metall sowie dem mindestens zweizähnigen Liganden ist weiterhin das Lösemittel sowie die Zellenparameter (Winkel α, β und γ sowie die Abstände A, B und C in Å) angegeben. Letztere wurden durch Röntgenbeugung bestimmt.

| **MOF-n** | **Inhaltsstoffe molares Verhältnis M+L** | **Solvens s** | **α** | **β** | **γ** | **a** | **b** | **c** | **Raumgruppe** |
|---|---|---|---|---|---|---|---|---|---|
| MOF-0 | Zn(NO₃)₂·6H₂O H₃(BTC) | Ethanol | 90 | 90 | 120 | 16.711 | 16.711 | 14.189 | P6(3)/ Mcm |
| MOF-2 | Zn(NO₃)₂·6H₂O (0.246 mmol) | DMF Toluen | 90 | 102.8 | 90 | 6.718 | 15.49 | 12.43 | P2(1)/n |
| | H₂(BDC) 0.241 mmol) | | | | | | | | |
| MOF-3 | Zn(NO₃)₂·6H₂O (1.89 mmol) | DMF MeOH | 99.72 | 111.11 | 108.4 | 9.726 | 9.911 | 10.45 | P-1 |
| | H₂(BDC) (1.93mmol) | | | | | | | | |
| MOF-4 | Zn(NO₃)₂·6H₂O (1.00 mmol) | Ethanol | 90 | 90 | 90 | 14.728 | 14.728 | 14.728 | P2(1)3 |
| | H₃(BTC) (0.5 mmol) | | | | | | | | |
| MOF-5 | Zn(NO₃)₂·6H₂O (2.22 mmol) | DMF Chlorbenzen | 90 | 90 | 90 | 25.669 | 25.669 | 25.669 | Fm-3m |
| | H₂(BDC) (2.17 mmol) | | | | | | | | |
| MOF-38 | Zn(NO₃)₂·6H₂O (0.27 mmol) | DMF Chlorbenzen | 90 | 90 | 90 | 20.657 | 20.657 | 17.84 | I4cm |
| | H₃(BTC) (0.15 mmol) | | | | | | | | |
| | | | | | | | | | |
| MOF-31 Zn(ADC)₂ | Zn(NO₃)₂·6H₂O 0.4 mmol | Ethanol | 90 | 90 | 90 | 10.821 | 10.821 | 10.821 | Pn(-3)m |
| | H₂(ADC) 0.8 mmol | | | | | | | | |
| MOF-12 Zn₂(ATC) | Zn(NO₃)₂·6H₂O 0.3 mmol | Ethanol | 90 | 90 | 90 | 15.745 | 16.907 | 18.167 | Pbca |
| | H₄(ATC) 0.15 mmol | | | | | | | | |
| MOF-20 ZnNDC | Zn(NO₃)₂·6H₂O 0.37 mmol | DMF Chlorbenzen | 90 | 92.13 | 90 | 8.13 | 16.444 | 12.807 | P2(1)/c |
| | H₂NDC 0.36 mmol | | | | | | | | |
| MOF-37 | Zn(NO₃)₂·6H₂O 0.2 mmol | DEF Chlorbenzen | 72.38 | 83.16 | 84.33 | 9.952 | 11.576 | 15.556 | P-1 |
| | H₂NDC 0.2 mmol | | | | | | | | |
| MOF-8 Tb₂ (ADC) | Tb(NO₃)₃·5H₂O 0.10 mmol | DMSO MeOH | 90 | 115.7 | 90 | 19.83 | 9.822 | 19.183 | C2/c |
| | H₂ADC 0.20 mmol | | | | | | | | |
| MOF-9 | Tb(NO₃)₃·5H₂O | DMSO | 90 | 102.09 | 90 | 27.056 | 16.795 | 28.139 | C2/c |
| Tb₂ (ADC) | 0.08 mmol | | | | | | | | |
| | H₂ADB 0.12 mmöl | | | | | | | | |
| MOF-6 | Tb(NO₃)₃·5H₂O 0.30 mmol | DMF MeOH | 90 | 91.28 | 90 | 17.599 | 19.996 | 10.545 | P21/c |
| | H₂ (BDC) 0.30 mmol | | | | | | | | |
| MOF-7 | Tb(NO₃)₃·5H₂O 0.15 mmol | H₂O | 102.3 | 91.12 | 101.5 | 6.142 | 10.069 | 10.096 | P-1 |
| | H₂(BDC) 0.15 mmol | | | | | | | | |
| MOF-69A | Zn(NO₃)₂·6H₂O 0.083 mmol | DEF H₂O₂ MeNH₂ | 90 | 111.6 | 90 | 23.12 | 20.92 | 12 | C2/c |
| | 4,4'BPDC 0.041 mmol | | | | | | | | |
| MOF-69B | Zn(NO₃)₂·6H₂O 0.083 mmol | DEF H₂O₂ MeNH₂ | 90 | 95.3 | 90 | 20.17 | 18.55 | 12.16 | C2/c |
| | 2,6-NCD 0.041 mmol | | | | | | | | |
| MOF-11 Cu₂(ATC) | Cu(NO₃)₂·2.5H₂O 0.47 mmol | H₂O | 90 | 93.86 | 90 | 12.987 | 11.22 | 11.336 | C2/c |
| | H₂ATC 0.22 mmol | | | | | | | | |
| MOF-11 Cu₂(ATC) dehydr. | | | 90 | 90 | 90 | 8.4671 | 8.4671 | 14.44 | P42/ mmc |
| MOF-14 Cu₃ (BTB) | Cu(NO₃)₂·2.5H₂O 0.28 mmol | H₂O DMF EtOH | 90 | 90 | 90 | 26.946 | 26.946 | 26.946 | Im-3 |
| | H₃BTB 0.052 mmol | | | | | | | | |
| MOF-32 Cd (ATC) | Cd(NO₃)₂-4H₂O 0.24 mmol | H₂O NaOH | 90 | 90 | 90 | 13.468 | 13.468 | 13.468 | P(-4)3m |
| | H₄ATC 0.10 mmol | | | | | | | | |
| MOF-33 Zn₂ (ATB) | ZnCl₂ 0.15 mmol | H₂O DMF EtOH | 90 | 90 | 90 | 19.561 | 15.255 | 23.404 | Imma |
| | H₄ATB 0.02 mmol | | | | | | | | |
| MOF-34 Ni(ATC) | Ni(NO₃)₂·6H₂O 0.24 mmol | H₂O NaOH | 90 | 90 | 90 | 10.066 | 11.163 | 19.201 | P2₁2₁2₁ |
| | H₄ATC 0.10 mmol | | | | | | | | |
| MOF-36 Zn₂ (MTB) | Zn(NO₃)₂·4H₂O 0.20 mmol | H₂O DMF | 90 | 90 | 90 | 15.745 | 16.907 | 18.167 | Pbca |
| | H₄MTB 0.04 mmol | | | | | | | | |
| MOF-39 Zn₃O(HBTB) | Zn(NO₃)₂ 4H₂O 0.27 mmol | H₂O DMF EtOH | 90 | 90 | 90 | 17.158 | 21.591 | 25.308 | Pnma |
| | H₃BTB 0.07 mmol | | | | | | | | |
| NO305 | FeCl₂·4H₂O 5.03 mmol | DMF | 90 | 90 | 120 | 8.2692 | 8.2692 | 63.566 | R-3c |
| | Ameisensre. 86.90 mmol | | | | | | | | |
| NO306A | FeCl₂·4H₂O 5.03 mmol | DEF | 90 | 90 | 90 | 9.9364 | 18.374 | 18.374 | Pbcn |
| | Ameisensre. 86.90 mmol | | | | | | | | |
| | | | | | | | | | |
| NO29 MOF-0 ähnlich | Mn(Ac)₂·4H₂O 0.46 mmol | DMF | 120 | 90 | 90 | 14.16 | 33.521 | 33.521 | P-1 |
| | H₃BTC 0.69 mmol | | | | | | | | |
| BPR48 A2 | Zn(NO₃)₂6H₂O 0.012 mmol | DMSO Toluen | 90 | 90 | 90 | 14.5 | 17.04 | 18.02 | Pbca |
| | H₂BDC 0.012 mmol | | | | | | | | |
| BPR69 B1 | Cd(NO₃)₂ 4H₂O 0.0212 mmol | DMSO | 90 | 98.76 | 90 | 14.16 | 15.72 | 17.66 | Cc |
| | H₂BDC 0.0428 mmol | | | | | | | | |
| BPR92 A2 | Co(NO₃)₂·6H₂O 0.018 mmol | NMP | 106.3 | 107.63 | 107.2 | 7.5308 | 10.942 | 11.025 | P1 |
| | H₂BDC 0.018 mmol | | | | | | | | |
| BPR95 C5 | Cd(NO₃)₂ 4H₂O 0.012 mmol | NMP | 90 | 112.8 | 90 | 14.460 | 11.085 | 15.829 | P2(1)/n |
| | H₂BDC 0.36 mmol | | | | | | | | |
| Cu C₆H₄O₆ | Cu(NO₃)₂·2.5H₂O 0.370 mmol | DMF Chlorbenzen | 90 | 105.29 | 90 | 15.259 | 14.816 | 14.13 | P2(1)/c |
| | H₂BDC(OH)₂ 0.37 mmol | | | | | | | | |
| M(BTC) MOF-0 ähnlich | Co(SO₄) H₂O 0.055 mmol | DMF | wie MOF-0 | | | | | | |
| | H₃BTC 0.037 mmol | | | | | | | | |
| Tb(C₆H₄O₆) | Tb(NO₃)_{3·}5H₂O 0.370 mmol | DMF Chlorbenzen | 104.6 | 107.9 | 97.147 | 10.491 | 10.981 | 12.541 | P-1 |
| | H₂(C₆H₄O₆) 0.56 mmol | | | | | | | | |
| Zn (C₂O₄) | ZnCl₂ 0.370 mmol | DMF Chlorbenzen | 90 | 120 | 90 | 9.4168 | 9.4168 | 8.464 | P(-3)1m |
| | Oxalsäure 0.37 mmol | | | | | | | | |
| Co(CHO) | Co(NO₃)₂·5H₂O 0.043 mmol | DMF | 90 | 91.32 | 90 | 11.328 | 10.049 | 14.854 | P2(1)/n |
| | Ameisensre. 1.60 mmol | | | | | | | | |
| Cd(CHO) | Cd(NO₃)₂·4H₂O 0.185 mmol | DMF | 90 | 120 | 90 | 8.5168 | 8.5168 | 22.674 | R-3c |
| | formic acid 0.185 mmol | | | | | | | | |
| Cu(C₃H₂O₄) | Cu(NO₃)₂·2.5H₂O 0.043 mmol | DMF | 90 | 90 | 90 | 8.366 | 8.366 | 11.919 | P43 |
| | Malonsre. 0.192 mmol | | | | | | | | |
| Zn₆(NDC)₅ MOF-48 | Zn(NO₃)₂·6H₂O 0.097 mmol | DMF Chlorbenzen H₂O₂ | 90 | 95.902 | 90 | 19.504 | 16.482 | 14.64 | C2/m |
| | 14 NDC 0.069 mmol | | | | | | | | |
| | | | | | | | | | |
| MOF-47 | Zn(NO₃)₂ 6H₂O 0.185 mmol | DMF Chlorbenzen H₂O₂ | 90 | 92.55 | 90 | 11.303 | 16.029 | 17.535 | P2(1)/c |
| | H₂(BDC[CH₃]₄) 0.185 mmol | | | | | | | | |
| MO25 | Cu(NO₃)₂·2.5H₂O 0.084 mmol | DMF | 90 | 112.0 | 90 | 23.880 | 16.834 | 18.389 | P2(1)/c |
| | BPhDC 0.085 mmol | | | | | | | | |
| Cu-Thio | Cu(NO₃)₂·2.5H₂O 0.084 mmol | DEF | 90 | 113.6 | 90 | 15.474 7 | 14.514 | 14.032 | P2(1)/c |
| | Thiophen Dicarbonsre. 0.085 mmol | | | | | | | | |
| CIBDC1 | Cu(NO₃)₂·2.5H₂O0. 084 mmol | DMF | 90 | 105.6 | 90 | 14.911 | 15.622 | 18.413 | C2/c |
| | H₂(BDCCl₂) 0.085 mmol | | | | | | | | |
| MOF-101 | Cu(NO₃)₂·2.5H₂O 0.084 mmol | DMF | 90 | 90 | 90 | 21.607 | 20.607 | 20.073 | Fm3m |
| | BrBDC 0.085 mmol | | | | | | | | |
| Zn₃(BTC)₂ | ZnCl₂ 0.033 mmol | DMF EtOH Base zugegeben | 90 | 90 | 90 | 26.572 | 26.572 | 26.572 | Fm-3m |
| | H₃BTC 0.033 mmol | | | | | | | | |
| MOF-j | Co(CH₃CO₂)₂·4H₂ O (1.65 mmol) | H₂O | 90 | 112.0 | 90 | 17.482 | 12.963 | 6.559 | C2 |
| | H₃(BZC) (0.95 mmol) | | | | | | | | |
| MOP-N | Zn(NO₃)₂·6H₂O H₃ (BTC) | Ethanol | 90 | 90 | 120 | 16.711 | 16.711 | 14.189 | P6(3)/mcm |
| PbBDC | Pb(NO₃)₂ (0.181 mmol) | DMF Ethanol | 90 | 102.7 | 90 | 8.3639 | 17.991 | 9.9617 | P2(1)/n |
| | H₂(BDC) (0.181 mmol) | | | | | | | | |
| Znhex | Zn(NO₃)₂·6H₂O (0.171 mmol) | DMF p-Xylen Ethanol | 90 | 90 | 120 | 37.116 5 | 37.117 | 30.019 | P3(1)c |
| | H₃BTB (0.114 mmol) | | | | | | | | |
| AS16 | FeBr₂ 0.927 mmol | DMF anhydr. | 90 | 90.13 | 90 | 7.2595 | 8.7894 | 19.484 | P2(1)c |
| | H₂(BDC) 0.927 mmol | | | | | | | | |
| AS27-2 | FeBr₂ 0.927 mmol | DMF anhydr. | 90 | 90 | 90 | 26.735 | 26.735 | 26.735 | Fm3m |
| | H₃(BDC) 0.464 mmol | | | | | | | | |
| AS32 | FeCl₃ 1.23 mmol | DMF anhydr. Ethanol | 90 | 90 | 120 | 12.535 | 12.535 | 18.479 | P6(2)c |
| | H₂(BDC) 1.23 mmol | | | | | | | | |
| | | | | | | | | | |
| AS54-3 | FeBr₂ 0.927 | DMF anhydr. n-Propanol | 90 | 109.98 | 90 | 12.019 | 15.286 | 14.399 | C2 |
| | BPDC 0.927 mmol | | | | | | | | |
| AS61-4 | FeBr₂ 0.927 mmol | Pyridin anhydr. | 90 | 90 | 120 | 13.017 | 13.017 | 14.896 | P6(2)c |
| | m-BDC 0.927 mmol | | | | | | | | |
| AS68-7 | FeBr₂ 0.927 mmol | DMF anhydr. Pyridin | 90 | 90 | 90 | 18.340 7 | 10.036 | 18.039 | Pca2₁ |
| | m-BDC 1.204 mmol | | | | | | | | |
| Zn(ADC) | Zn(NO₃)₂·6H₂O 0.37 mmol | DMF Chlorbenzen | 90 | 99.85 | 90 | 16.764 | 9.349 | 9.635 | C2/c |
| | H₂(ADC) 0.36 mmol | | | | | | | | |
| MOF-12 Zn₂ (ATC) | Zn(NO₃)₂·6H₂O 0.30 mmol | Ethanol | 90 | 90 | 90 | 15.745 | 16.907 | 18.167 | Pbca |
| | H₄(ATC) 0.15 mmol | | | | | | | | |
| MOF-20 ZnNDC | Zn(NO₃)₂·6H₂O 0.37 mmol | DMF Chlorbenzen | 90 | 92.13 | 90 | 8.13 | 16.444 | 12.807 | P2(1)/c |
| | H₂NDC 0.36 mmol | | | | | | | | |
| MOF-37 | Zn(NO₃)₂·6H₂O 0.20 mmol | DEF Chlorbenzen | 72.38 | 83.16 | 84.33 | 9.952 | 11.576 | 15.556 | P-1 |
| | H₂NDC 0.20 mmol | | | | | | | | |
| Zn(NDC) (DMSO) | Zn(NO₃)₂·6H₂O | DMSO | 68.08 | 75.33 | 88.31 | 8.631 | 10.207 | 13.114 | P-1 |
| | H₂NDC | | | | | | | | |
| Zn(NDC) | Zn(NO₃)₂·6H₂O H₂NDC | | 90 | 99.2 | 90 | 19.289 | 17.628 | 15.052 | C2/c |
| Zn(HPDC) | Zn(NO₃)₂·4H₂O 0.23 mmol | DMF H₂O | 107.9 | 105.06 | 94.4 | 8.326 | 12.085 | 13.767 | P-1 |
| | H₂(HPDC) 0.05 mmol | | | | | | | | |
| | | | | | | | | | |
| Co(HPDC) | Co(NO₃)₂·6H₂O 0.21 mmol | DMF H₂O/ Ethanol | 90 | 97.69 | 90 | 29.677 | 9.63 | 7.981 | C2/c |
| | H₂ (HPDC) 0.06 mmol | | | | | | | | |
| Zn₃(PDC)2.5 | Zn(NO₃)₂·4H₂O 0.17 mmol | DMF/ CIBz H₂O/ TEA | 79.34 | 80.8 | 85.83 | 8.564 | 14.046 | 26.428 | P-1 |
| | H₂(HPDC) 0.05 mmol | | | | | | | | |
| Cd₂ (TPDC)2 | Cd(NO₃)₂·4H₂O 0.06 mmol | Methanol/ CHP H₂O | 70.59 | 72.75 | 87.14 | 10.102 | 14.412 | 14.964 | P-1 |
| | H₂(HPDC) 0.06 mmol | | | | | | | | |
| Tb(PDC)1.5 | Tb(NO₃)₃·5H₂O 0.21 mmol | DMF H₂O/ Ethanol | 109.8 | 103.61 | 100.14 | 9.829 | 12.11 | 14.628 | P-1 |
| | H₂(PDC) 0.034 mmol | | | | | | | | |
| | | | | | | | | | |
| ZnDBP | Zn(NO₃)₂·6H₂O 0.05 mmol | MeOH | 90 | 93.67 | 90 | 9.254 | 10.762 | 27.93 | P2/n |
| | Dibenzylphosphat 0.10 mmol | | | | | | | | |
| Zn₃(BPDC) | ZnBr₂ 0.021 mmol | DMF | 90 | 102.76 | 90 | 11.49 | 14.79 | 19.18 | P21/n |
| | 4,4'BPDC 0.005 mmol | | | | | | | | |
| CdBDC | Cd(NO₃)₂·4H₂O 0.100 mmol | DMF Na₂SiO ₃(aq) | 90 | 95.85 | 90 | 11.2 | 11.11 | 16.71 | P21/n |
| | H₂(BDC) 0.401 mmol | | | | | | | | |
| Cd-mBDC | Cd(NO₃)₂·4H₂O 0.009 mmol | DMF MeNH₂ | 90 | 101.1 | 90 | 13.69 | 18.25 | 14.91 | C2/c |
| | H₂(mBDC) 0.018 mmol | | | | | | | | |
| Zn₄OBND C | Zn(NO₃)₂·6H₂O 0.041 mmol | DEF MeNH₂ H₂O₂ | 90 | 90 | 90 | 22.35 | 26.05 | 59.56 | Fmmm |
| | BNDC | | | | | | | | |
| Eu(TCA) | Eu(NO₃)₃·6H₂O 0.14 mmol | DMF Chlorbenzen | 90 | 90 | 90 | 23.325 | 23.325 | 23.325 | Pm-3n |
| | TCA 0.026 mmol | | | | | | | | |
| Tb(TCA) | Tb(NO₃)₃·6H₂O 0.069 mmol | DMF Chlorbenzen | 90 | 90 | 90 | 23.272 | 23.272 | 23.372 | Pm-3n |
| | TCA 0.026 mmol | | | | | | | | |
| Formate | Ce(NO₃)₃·6H₂O 0.138 mmol | H₂O Ethanol | 90 | 90 | 120 | 10.668 | 10.667 | 4.107 | R-3m |
| | Ameisensre. 0.43 mmol | | | | | | | | |
| | FeCl₂·4H₂O 5.03 mmol | DMF | 90 | 90 | 120 | 8.2692 | 8.2692 | 63.566 | R-3c |
| | Ameisensre. 86.90 mmol | | | | | | | | |
| | FeCl₂·4H₂O 5.03 mmol | DEF | 90 | 90 | 90 | 9.9364 | 18.374 | 18.374 | Pbcn |
| | Ameisensre. 86.90 mmol | | | | | | | | |
| | FeCl₂·4H₂O 5.03 mmol | DEF | 90 | 90 | 90 | 8.335 | 8.335 | 13.34 | P-31c |
| | Ameisensre. 86.90 mmol | | | | | | | | |
| NO330 | FeCl₂·4H₂O 0.50 mmol | Formamid | 90 | 90 | 90 | 8.7749 | 11.655 | 8.3297 | Pnna |
| | Ameisensre. 8.69 mmol | | | | | | | | |
| NO332 | FeCl₂·4H₂O 0.50 mmol | DIP | 90 | 90 | 90 | 10.031 3 | 18.808 | 18.355 | Pbcn |
| | Ameisensre. 8.69 mmol | | | | | | | | |
| | | | | | | | | | |
| NO333 | FeCl₂·4H₂O 0.50 mmol | DBF | 90 | 90 | 90 | 45.275 4 | 23.861 | 12.441 | Cmcm |
| | Ameisensre. 8.69 mmol | | | | | | | | |
| NO335 | FeCl₂·4H₂O 0.50 mmol | CHF | 90 | 91.372 | 90 | 11.596 4 | 10.187 | 14.945 | P21/n |
| | Ameisensre. 8.69 mmol | | | | | | | | |
| NO336 | FeCl₂·4H₂O 0.50 mmol | MFA | 90 | 90 | 90 | 11.794 5 | 48.843 | 8.4136 | Pbcm |
| | Ameisensre. 8.69 mmol | | | | | | | | |
| NO13 | Mn(Ac)₂·4H₂O 0.46 mmol | Ethanol | 90 | 90 | 90 | 18.66 | 11.762 | 9.418 | Pbcn |
| | Benzoesre. 0.92 mmol | | | | | | | | |
| | Bipyridin 0.46 mmol | | | | | | | | |
| NO29 MOF-0 ähnlich | Mn(Ac)₂·4H₂O 0.46 mmol | DMF | 120 | 90 | 90 | 14.16 | 33.521 | 33.521 | P-1 |
| | H₃BTC 0.69 mmol | | | | | | | | |
| Mn(hfac)₂ (O₂CC₆H₅) | Mn(Ac)₂·4H₂O 0.46 mmol | Ether | 90 | 95.32 | 90 | 9.572 | 17.162 | 14.041 | C2/c |
| | Hfac 0.92 mmol | | | | | | | | |
| | Bipyridin 0.46 mmol | | | | | | | | |
| BPR43G2 | Zn(NO₃)₂·6H₂O 0.0288 mmol | DMF CH₃CN | 90 | 91.37 | 90 | 17.96 | 6.38 | 7.19 | C2/c |
| | H₂BDC 0.0072 mmol | | | | | | | | |
| BPR48A2 | Zn(NO₃)₂6H₂O 0.012 mmol | DMSO Toluen | 90 | 90 | 90 | 14.5 | 17.04 | 18.02 | Pbca |
| | H₂BDC 0.012 mmol | | | | | | | | |
| BPR49B1 | Zn(NO₃)₂6H₂O 0.024 mmol | DMSO Methanol | 90 | 91.172 | 90 | 33.181 | 9.824 | 17.884 | C2/c |
| | H₂BDC 0.048 mmol | | | | | | | | |
| BPR56E1 | Zn(NO₃)₂6H₂O 0.012 mmol | DMSO n-Propanol | 90 | 90.096 | 90 | 14.587 3 | 14.153 | 17.183 | P2(1)/n |
| | H₂BDC 0.024 mmol | | | | | | | | |
| BPR68D10 | Zn(NO₃)₂6H₂O 0.0016 mmol | DMSO Benzen | 90 | 95.316 | 90 | 10.062 7 | 10.17 | 16.413 | P2(1)/c |
| | H₃BTC 0.0064 mmol | | | | | | | | |
| BPR69B1 | Cd(NO₃)₂4H₂O 0.0212 mmol | DMSO | 90 | 98.76 | 90 | 14.16 | 15.72 | 17.66 | Cc |
| | H₂BDC 0.0428 mmol | | | | | | | | |
| | | | | | | | | | |
| BPR73E4 | Cd(NO₃)₂4H₂O 0.006 mmol | DMSO Toluen | 90 | 92.324 | 90 | 8.7231 | 7.0568 | 18.438 | P2(1)/n |
| | H₂BDC 0.003 mmol | | | | | | | | |
| BPR76D5 | Zn(NO₃)₂6H₂O 0.0009 mmol | DMSO | 90 | 104.17 | 90 | 14.419 1 | 6.2599 | 7.0611 | Pc |
| | H₂BzPDC 0.0036 mmol | | | | | | | | |
| BPR80B5 | Cd(NO₃)₂·4H₂O 0.018 mmol | DMF | 90 | 115.11 | 90 | 28.049 | 9.184 | 17.837 | C2/c |
| | H₂BDC 0.036 mmol | | | | | | | | |
| BPR80H5 | Cd(NO₃)₂ 4H₂O 0.027 mmol | DMF | 90 | 119.06 | 90 | 11.474 6 | 6.2151 | 17.268 | P2/c |
| | H₂BDC 0.027 mmol | | | | | | | | |
| BPR82C6 | Cd(NO₃)₂ 4H₂O 0.0068 mmol | DMF | 90 | 90 | 90 | 9.7721 | 21.142 | 27.77 | Fdd2 |
| | H₂BDC 0.202 mmol | | | | | | | | |
| BPR86C3 | Co(NO₃)₂ 6H₂O 0.0025 mmol | DMF | 90 | 90 | 90 | 18.344 9 | 10.031 | 17.983 | Pca2(1) |
| | H₂BDC 0.075 mmol | | | | | | | | |
| BPR86H6 | Cd(NO₃)₂·6H₂O 0.010 mmol | DMF | 80.98 | 89.69 | 83.41 2 | 9.8752 | 10.263 | 15.362 | P-1 |
| | H₂BDC 0.010 mmol | | | | | | | | |
| | Co(NO₃)₂ 6H₂O | NMP | 106.3 | 107.63 | 107.2 | 7.5308 | 10.942 | 11.025 | P1 |
| BPR95A2 | Zn(NO₃)₂ 6H₂O 0.012 mmol | NMP | 90 | 102.9 | 90 | 7.4502 | 13.767 | 12.713 | P2(1)/c |
| | H₂BDC 0.012 mmol | | | | | | | | |
| CuC₆F₄O₄ | Cu(NO₃)₂·2.5H₂O 0.370 mmol | DMF Chlorbenzen | 90 | 98.834 | 90 | 10.967 5 | 24.43 | 22.553 | P2(1)/n |
| | H₂BDC(OH)₂ 0.37 mmol | | | | | | | | |
| Fe Formic | FeCl₂·4H₂O 0.370 mmol | DMF | 90 | 91.543 | 90 | 11.495 | 9.963 | 14.48 | P2(1)/n |
| | Ameisensre. 0.37 mmol | | | | | | | | |
| Mg Formic | Mg(NO₃)₂·6H₂O 0.370 mmol | DMF | 90 | 91.359 | 90 | 11.383 | 9.932 | 14.656 | P2(1)/n |
| | Ameisensre. 0.37 mmol | | | | | | | | |
| MgC₆H₄O₆ | Mg(NO₃)₂·6H₂O 0.370 mmol | DMF | 90 | 96.624 | 90 | 17.245 | 9.943 | 9.273 | C2/c |
| | H₂BDC(OH)₂ 0.37 mmol | | | | | | | | |
| Zn C₂H₄BDC MOF-38 | ZnCl₂ 0.44 mmol | DMF | 90 | 94.714 | 90 | 7.3386 | 16.834 | 12.52 | P2(1)/n |
| | CBBDC 0.261 mmol | | | | | | | | |
| MOF-49 | ZnCl₂ 0.44 mmol | DMF CH₃CN | 90 | 93.459 | 90 | 13.509 | 11.984 | 27.039 | P2/c |
| | m-BDC 0.261 mmol | | | | | | | | |
| MOF-26 | Cu(NO₃)₂·5H₂O 0.084 mmol | DMF | 90 | 95.607 | 90 | 20.879 7 | 16.017 | 26.176 | P2(1)/n |
| | DCPE 0.085 mmol | | | | | | | | |
| | | | | | | | | | |
| MOF-112 | Cu(NO₃)₂·2.5H₂O 0.084 mmol | DMF Ethanol | 90 | 107.49 | 90 | 29.324 1 | 21.297 | 18.069 | C2/c |
| | o-Br-*m*-BDC 0.085 mmol | | | | | | | | |
| MOF-109 | Cu(NO₃)₂·2.5H₂O 0.084 mmol | DMF | 90 | 111.98 | 90 | 23.880 1 | 16.834 | 18.389 | P2(1)/c |
| | KDB 0.085 mmol | | | | | | | | |
| MOF-111 | Cu(NO₃)₂·2.5H₂O 0.084 mmol | DMF Ethanol | 90 | 102.16 | 90 | 10.676 7 | 18.781 | 21.052 | C2/c |
| | o-BrBDC 0.085 mmol | | | | | | | | |
| MOF-110 | Cu(NO₃)₂·2.5H₂O 0.084 mmol | DMF | 90 | 90 | 120 | 20.065 2 | 20.065 | 20.747 | R-3/m |
| | Thiophen Dicarbonsre. 0.085 mmol | | | | | | | | |
| MOF-107 | Cu(NO₃)₂·2.5H₂O 0.084 mmol | DEF | 104.8 | 97.075 | 95.20 6 | 11.032 | 18.067 | 18.452 | P-1 |
| | Thiophen Dicarbonsre. 0.085 mmol | | | | | | | | |
| MOF-108 | Cu(NO₃)₂·2.5H₂O 0.084 mmol | DBF/ Methanol | 90 | 113.63 | 90 | 15.474 7 | 14.514 | 14.032 | C2/c |
| | Thiophen Dicarbonsre. 0.085 mmol | | | | | | | | |
| MOF-102 | Cu(NO₃)₂·2.5H₂O 0.084 mmol | DMF | 91.63 | 106.24 | 112.0 1 | 9.3845 | 10.794 | 10.831 | P-1 |
| | H₂(BDCCl₂) 0.085 mmol | | | | | | | | |
| Clbdc1 | Cu(NO₃)₂·2.5H₂O 0.084 mmol | DEF | 90 | 105.56 | 90 | 14.911 | 15.622 | 18.413 | P-1 |
| | H₂(BDCCl₂) 0.085 mmol | | | | | | | | |
| Cu(NMOP) | Cu(NO₃)₂·2.5H₂O 0.084 mmol | DMF | 90 | 102.37 | 90 | 14.923 8 | 18.727 | 15.529 | P2(1)/m |
| | NBDC 0.085 mmol | | | | | | | | |
| Tb(BTC) | Tb(NO₃)₃·5H₂O 0.033 mmol | DMF | 90 | 106.02 | 90 | 18.6986 | 11.368 | 19.721 | |
| | H₃BTC 0.033 mmol | | | | | | | | |
| Zn₃(BTC)₂ Honk | ZnCl₂ 0.033 mmol | DMF Ethanol | 90 | 90 | 90 | 26.572 | 26.572 | 26.572 | Fm-3m |
| | H₃BTC 0.033 mmol | | | | | | | | |
| Zn4O(NDC) | Zn(NO3)2·4H2O 0.066 mmol | DMF Ethanol | 90 | 90 | 90 | 41.559 4 | 18.818 | 17.574 | aba2 |
| | 14NDC 0.066 mmol | | | | | | | | |
| CdTDC | Cd(NO3)2·4H2O 0.014 mmol | DMF H2O | 90 | 90 | 90 | 12.173 | 10.485 | 7.33 | Pmma |
| | Thiophen 0.040 mmol | | | | | | | | |
| | DABCO 0.020 mmol | | | | | | | | |
| IRMOF-2 | Zn(NO3)2·4H2O 0.160 mmol | DEF | 90 | 90 | 90 | 25.772 | 25.772 | 25.772 | Fm-3m |
| | o-Br-BDC 0.60 mmol | | | | | | | | |
| IRMOF-3 | Zn(NO3)2·4H2O 0.20 mmol | DEF Ethanol | 90 | 90 | 90 | 25.747 | 25.747 | 25.747 | Fm-3m |
| | H2N-BDC 0.60 mmol | | | | | | | | |
| IRMOF-4 | Zn(NO3)2·4H2O 0.11 mmol | DEF | 90 | 90 | 90 | 25.849 | 25.849 | 25.849 | Fm-3m |
| | [C3H7O]2-BDC 0.48 mmol | | | | | | | | |
| IRMOF-5 | Zn(NO3)2·4H2O 0.13 mmol | DEF | 90 | 90 | 90 | 12.882 | 12.882 | 12.882 | Pm-3m |
| | [C5H11O]2-BDC 0.50 mmol | | | | | | | | |
| IRMOF-6 | Zn(NO3)2·4H2O 0.20 mmol | DEF | 90 | 90 | 90 | 25.842 | 25.842 | 25.842 | Fm-3m |
| | [C2H4]-BDC 0.60 mmol | | | | | | | | |
| IRMOF-7 | Zn(NO3)2·4H2O 0.07 mmol | DEF | 90 | 90 | 90 | 12.914 | 12.914 | 12.914 | Pm-3m |
| | 1,4NDC 0.20 mmol | | | | | | | | |
| IRMOF-8 | Zn(NO3)2·4H2O 0.55 mmol | DEF | 90 | 90 | 90 | 30.092 | 30.092 | 30.092 | Fm-3m |
| | 2,6NDC 0.42 mmol | | | | | | | | |
| IRMOF-9 | Zn(NO3)2·4H2O 0.05 mmol | DEF | 90 | 90 | 90 | 17.147 | 23.322 | 25.255 | Pnnm |
| | BPDC 0.42 mmol | | | | | | | | |
| IRMOF-10 | Zn(NO3)2·4H2O 0.02 mmol | DEF | 90 | 90 | 90 | 34.281 | 34.281 | 34.281 | Fm-3m |
| | BPDC 0.012 mmol | | | | | | | | |
| IRMOF-11 | Zn(NO3)2·4H2O 0.05 mmol | DEF | 90 | 90 | 90 | 24.822 | 24.822 | 56.734 | R-3m |
| | HPDC 0.20 mmol | | | | | | | | |
| IRMOF-12 | Zn(NO3)2·4H2O 0.017 mmol | DEF | 90 | 90 | 90 | 34.281 | 34.281 | 34.281 | Fm-3m |
| | HPDC 0.12 mmol | | | | | | | | |
| | | | | | | | | | |
| IRMOF-13 | Zn(NO₃)₂·4H₂O 0.048 mmol | DEF | 90 | 90 | 90 | 24.822 | 24.822 | 56.734 | R-3m |
| | PDC 0.31 mmol | | | | | | | | |
| IRMOF-14 | Zn(NO₃)₂·4H₂O 0.17 mmol | DEF | 90 | 90 | 90 | 34.381 | 34.381 | 34.381 | Fm-3m |
| | PDC 0.12 mmol | | | | | | | | |
| IRMOF-15 | Zn(NO₃)₂·4H₂O 0.063 mmol | DEF | 90 | 90 | 90 | 21.459 | 21.459 | 21.459 | Im-3m |
| | TPDC 0.025 mmol | | | | | | | | |
| IRMOF-16 | Zn(NO₃)₂·4H₂O 0.0126 mmol | DEF NMP | 90 | 90 | 90 | 21.49 | 21.49 | 21.49 | Pm-3m |
| | TPDC 0.05 mmol | | | | | | | | |

| | | | | | | | | | |
|---|---|---|---|---|---|---|---|---|---|
| ADC Acetylenedicarbonsäure NDC Naphtalindicarbonsäure BDC Benzoldicarbonsäure ATC Adamantantetracarbonsäure BTC Benzoltricarbonsäure BTB Benzoltribenzoesäure MTB Methantetrabenzoesäure ATB Adamantantetrabenzoesäure ADB Adamantandibenzoesäure | | | | | | | | | |

Weitere metallorganische Gerüstmaterialien sind MOF-2 bis 4, MOF-9, MOF-31 bis 36, MOF-39, MOF-69 bis 80, MOF103 bis 106, MOF-122, MOF-125, MOF-150, MOF-177, MOF-178, MOF-235, MOF-236, MOF-500, MOF-501, MOF-502, MOF-505, IRMOF-1, IRMOF-61, IRMOP-13, IRMOP-51, MIL-17, MIL-45, MIL-47, MIL-53, MIL-59, MIL-60, MIL-61, MIL-63, MIL-68, MIL-79, MIL-80, MIL-83, MIL-85, CPL-1 bis 2, SZL-1 welche in der Literatur beschrieben sind.

Besonders bevorzugte metallorganische Gerüstmaterialien sind Al-BDC, MOF-5, IR-MOF-8, Cu-BTC, Al-NDC, Al-AminoBDC, Cu-BDC-TEDA, Zn-BDC-TEDA, AI-BTC, Al-NDC, Mg-NDC, Al-Fumarat, Zn-2-Aminoimidazolat, Cu-Biphenyldicarboxylat-TEDA, MOF-177, MOF-74. Weiter mehr bevorzugt sind Al-BDC und Al-BTC.

Neben der konventionellen Methode zur Herstellung der MOF, wie sie beispielsweise in US 5,648,508 beschrieben ist, können diese auch auf elektrochemischem Wege hergestellt werden. Diesbezüglich wird auf die DE-A 103 55 087 sowie WO-A 2005/049892 verwiesen. Die auf diesem Weg hergestellten metallorganischen Gerüstmaterialien weisen besonders gute Eigenschaften in Zusammenhang mit der Adsorption und Desorption von chemischen Stoffen, insbesondere von Gasen.

Unabhängig von dessen Herstellung fällt das metallorganische Gerüstmaterial in pulverförmiger bzw. kristalliner Form an. Dieses kann als solches als Sorbens im erfindungsgemäßen Verfahren alleine oder zusammen mit anderen Sorbentien oder weiteren Materialien eingesetzt werden. Vorzugsweise geschieht dies als Schüttgut, insbesondere in einem Festbett. Weiterhin kann das metallorganische Gerüstmaterial in einen Formkörper umgewandelt werden. Bevorzugte Verfahren sind hierbei die Verstrangung oder Tablettierung. Bei der Formkörperherstellung können zum metallorganischen Gerüstmaterial weitere Materialien, wie beispielsweise Binder, Gleitmittel oder andere Additive hinzugesetzt werden. Ebenso ist es denkbar, dass Mischungen von Gerüstmaterial und anderen Adsorbentien beispielsweise Aktivkohle als Formkörper hergestellt werden oder getrennt Formkörper ergeben, die dann als Formkörpermischungen eingesetzt werden.

Hinsichtlich der möglichen Geometrien dieser Formkörper existieren im Wesentlichen keine Beschränkungen. Beispielsweise sind unter anderem Pellets wie beispielsweise scheibenförmige Pellets, Pillen, Kugeln, Granulat, Extrudate wie beispielsweise Stränge, Waben, Gitter oder Hohlkörper zu nennen.

Zur Herstellung dieser Formkörper sind grundsätzlich sämtliche geeigneten Verfahren möglich. Es sind insbesondere folgende Verfahrensführungen bevorzugt:
- Kneten des Gerüstmaterials allein oder zusammen mit mindestens einem Bindemittel und/oder mindestens einem Anteigungsmittel und/oder mindestens einer Templatverbindung unter Erhalt eines Gemisches; Verformen des erhaltenen Gemisches mittels mindestens einer geeigneten Methode wie beispielsweise Extrudieren; optional Waschen und/oder Trocknen und/oder Calcinieren des Extrudates; optional Konfektionieren.
- Aufbringen des Gerüstmaterials auf mindestens ein gegebenenfalls poröses Trägermaterial. Das erhaltene Material kann dann gemäß der vorstehend beschriebenen Methode zu einem Formkörper weiterverarbeitet werden.
- Aufbringen des Gerüstmaterials auf mindestens ein gegebenenfalls poröses Substrat.

Kneten und Verformen kann gemäß jedes geeigneten Verfahrens erfolgen, wie beispielsweise in Ullmanns Enzyklopädie der Technischen Chemie, 4. Auflage, Band 2, S. 313 ff. (1972) beschrieben, deren diesbezüglicher Inhalt durch Bezugnahme in den Kontext der vorliegenden Anmeldung vollumfänglich einbezogen wird.

Beispielsweise bevorzugt kann das Kneten und/oder Verformen mittels einer Kolbenpresse, Walzenpresse in Anwesenheit oder Abwesenheit mindestens eines Bindermaterials, Compoundieren, Pelletieren, Tablettieren, Extrudieren, Co-Extrudieren, Verschäumen, Verspinnen, Beschichten, Granulieren, bevorzugt Sprühgranulieren, Versprühen, Sprühtrocknen oder einer Kombination aus zwei oder mehr dieser Methoden erfolgen.

Ganz besonders werden Pellets und/oder Tabletten hergestellt.

Das Kneten und/oder Verformen kann bei erhöhten Temperaturen wie beispielsweise im Bereich von Raumtemperatur bis 300 °C und/oder bei erhöhtem Druck wie beispielsweise im Bereich von Normaldruck bis hin zu einigen hundert bar und/oder in einer Schutzgasatmosphäre wie beispielsweise in Anwesenheit mindestens eines Edelgases, Stickstoff oder einem Gemisch aus zwei oder mehr davon erfolgen.

Das Kneten und/oder Verformen wird gemäß einer weiteren Ausführungsform unter Zugabe mindestens eines Bindemittels durchgeführt, wobei als Bindemittel grundsätzlich jede chemische Verbindung eingesetzt werden kann, die die zum Kneten und/oder Verformen gewünschte Viskosität der zu verknetenden und/oder verformenden Masse gewährleistet. Demgemäß können Bindemittel im Sinne der vorliegenden Erfindung sowohl Viskositätserhöhende als auch Viskositätsemiedrigende Verbindungen sein.

Als unter anderem bevorzugte Bindemittel sind beispielsweise Aluminiumoxid oder Aluminiumoxid enthaltende Binder, wie sie beispielsweise in der WO 94/29408 beschrieben sind, Siliciumdioxid, wie es beispielsweise in der EP 0 592 050 A1 beschrieben ist, Mischungen ais Siliciumdioxid und Aluminiumoxid, wie sie beispielsweise in der WO 94/13584 beschrieben sind, Tonminerale, wie sie beispielsweise in der JP 03-037156 A beschrieben sind, beispielsweise Montmorillonit, Kaolin, Bentonit, Hallosit, Dickit, Nacrit und Anauxit, Alkoxysilane, wie sie beispielsweise in der EP 0 102 544 B1 beschrieben sind, beispielsweise Tetraalkoxysilane wie beispielsweise Tetramethoxysilan, Tetraethoxysilan, Tetrapropoxysilan, Tetrabutoxysilan, oder beispielsweise Trialkoxysilane wie beispielsweise Trimethoxysilan, Triethoxysilan, Tripropoxysilan, Tributoxysilan, Alkoxytitanate, beispielsweise Tetraalkoxytitanate wie beispielsweise Tetramethoxytitanat, Tetraethoxytitanat, Tetrapropoxytitanat, Tetrabutoxytitanat, oder beispielsweise Trialkoxytitanate wie beispielsweise Trimethoxytitanat, Triethoxytitanat, Tripropoxytitanat, Tributoxytitanat, Alkoxyzirkonate, beispielsweise Tetraalkoxyzirkonate wie beispielsweise Tetramethoxyzirkonat, Tetraethoxyzirkonat, Tetrapropoxyzirkonat, Tetrabutoxyzirkonat, oder beispielsweise Trialkoxyzirkonate wie beispielsweise Trimethoxyzirkonat, Triethoxyzirkonat, Tripropoxyzirkonat, Tributoxyzirkonat, Silikasole, amphiphile Substanzen und/oder Graphite zu nennen. Insbesondere bevorzugt ist Graphit.

Als viskositätssteigernde Verbindung kann beispielsweise auch, gegebenenfalls zusätzlich zu den oben genannten Verbindungen, eine organische Verbindung und/oder ein hydrophiles Polymer wie beispielsweise Cellulose oder ein Cellulosederivat wie beispielsweise Methylcellulose und/oder ein Polyacrylat und/oder ein Polymethacrylat und/oder ein Polyvinylalkohol und/oder ein Polyvinylpyrrolidon und/oder ein Polyisobuten und/oder ein Polytetrahydrofuran eingesetzt werden.

Als Anteigungsmittel kann unter anderem bevorzugt Wasser oder mindestens ein Alkohol wie beispielsweise ein Monoalkohol mit 1 bis 4 C-Atomen wie beispielsweise Methanol, Ethanol, n-Propanol, iso-Propanol, 1-Butanol, 2-Butanol, 2-Methyl-1-propanol oder 2-Methyl-2-propanol oder ein Gemisch aus Wasser und mindestens einem der genannten Alkohole oder ein mehrwertiger Alkohol wie beispielsweise ein Glykol, bevorzugt ein wassermischbarer mehrwertiger Alkohol, allein oder als Gemisch mit Wasser und/oder mindestens einem der genannten einwertigen Alkohole eingesetzt werden.

Weitere Additive, die zum Kneten und/oder Verformen eingesetzt werden können, sind unter anderem Amine oder Aminderivate wie beispielsweise Tetraalkylammonium-Verbindungen oder Aminoalkohole und Carbonat enthaltende Verbindungen wie etwa Calciumcarbonat. Solche weiteren Additive sind etwa in der EP 0 389 041 A1, der EP 0 200 260 A1 oder der WO 95/19222 beschrieben.

Die Reihenfolge der Additive wie Templatverbindung, Binder, Anteigungsmittel, viskositätssteigernde Substanz beim Verformen und Kneten ist grundsätzlich nicht kritisch.

Gemäß einer weiteren bevorzugten Ausführungsform wird der gemäß Kneten und/oder Verformen erhaltene Formkörper mindestens einer Trocknung unterzogen, die im Allgemeinen bei einer Temperatur im Bereich von 25 bis 300 °C, bevorzugt im Bereich von 50 bis 300 °C und besonders bevorzugt im Bereich von 100 bis 300 °C durchgeführt wird. Ebenso ist es möglich, im Vakuum oder unter Schutzgasatmosphäre oder durch Sprühtrocknung zu trocknen.

Gemäß einer besonders bevorzugten Ausführungsform wird im Rahmen dieses Trocknungsvorgangs mindestens eine der als Additive zugesetzten Verbindungen zumindest teilweise aus dem Formkörper entfernt.

### Beisplele (nicht erfindungsgemäß)

### Beispiel 1 Aktivierung durch Desorption von Wasser und CO₂ eines an Luft gelagerten Al-Terephthatsäure metallorganischen Gerüstmaterial

5,8 g Terephthalsäure (BDC) und 26 g Al(NO₃)₃*9H₂O werden in 100 ml DMF suspendiert und die Mischung 16 h unter Rückfluss bei 133 °C gerührt. Anschließend wird der Feststoff abfiltriert, mit 20 ml Methanol gewaschen und in einem Vakuumtrockenschrank bei 200°C 16 h lang getrocknet. Abschließend wird das Pulver 3 Tage lang in einem Muffelofen (100 l/h Luft) bei 330 °C nachbehandelt (Aufheizen mit ca. 75 °C/h).

Es werden 7,7 g eines hellbraunen Pulvers erhalten mit einer Oberfläche von 1267 m²/g (nach Langmuir).

Das so hergestellte Gerüstmaterial wird anschließend für mehrere Stunden offen unter Umgebungsatmosphäre gelagert. Die Probe wird anschließend in einen Probetiegel gegeben und unter Argon mit 2 K/min aufgeheizt. Das Gewicht der Probe (Thermogravimetrie, TG) sowie die Wärmetönung von eventuellen Reaktionen (Differentielle Thermoanalyse, DTA), werden untersucht. Die bei der Aktivierung desorbierten Produkte werden mittels IR-Detektion identifiziert.

Es zeigt sich, dass Wasser und CO₂ (beides wird im Gasstrom zeitlich annähernd parallel identifiziert) bereits bei ca. 40°C beginnen zu desorbieren. Das Maximum des endothermen Desorptionspeaks liegt bei ca. 80°C. Bei etwa 100°C ist der größte Teil der zu desorbierenden Stoffe entfernt. Bei höheren Temperaturen ist der Massenverlust nur noch gering. Bis 235°C wird eine negative Massenänderung von 3 Gew.-% ermittelt.

### Beispiel 2 Aktivierung durch Desorption von Wasser und CO₂ von einem an Luft gelagerten Cu-1,3,5-Bezonltricarboxylat metallorganischen Gerüstmaterial

12,2 g 1,3,5-Benzoltricarbonsäure und 13,9 g wasserfreies Kupfersulfat werden in 275 g Ethylenglykol suspendiert und unter Rühren 8 h bei 110°C gehalten. Der blaue Niederschlag wird abfiltriert, und mit 5 x 120 ml Methanol gewaschen. Nach der Trocknung für 24 h bei 75°C im Vakuum (0,2 mbar) werden 6,7 g Produkt erhalten.

Vor der Oberflächenbestimmung wird die Probe zusätzlich bei 110°C evakuiert. Die N₂-Oberfläche liegt bei 2031 m²/g (Langmuir).

Das so erhaltene Gerüstmaterial wird für mehrere Stunden offen unter Umgebungsatmosphäre gelagert. Die Probe wird anschließend ein einen Probetiegel gegeben und unter Argon mit 2 K/min aufgeheizt. Das Gewicht der Probe (Thermogravimetrie, TG) sowie die Wärmetönung von eventuellen Reaktionen (Differentielle Thermoanalyse, DTA), werden untersucht. Die bei der Aktivierung desorbierten Produkte werden mittels IR-Detektion identifiziert.

Es zeigt sich, dass Wasser und CO₂ (beides wird im Gasstrom zeitlich annähernd parallel identifiziert) bereits bei ca. 40°C beginnen, zu desorbieren. Das Maximum des endothermen Desorptionspeaks liegt bei ca. 115°C. Bei 150°C ist der größte Teil der zu desorbierenden Stoffe bereits entfernt. Bei höheren Temperaturen ist der Massenverlust nur noch sehr gering. Bis 200°C wird eine negative Massenänderung von 31,3 Gew.-% ermittelt.

### Beispiel 3 Aktivierung durch Desorption von Wasser von einem unter 90% Luftfeuchtigkeit gelagerten Al-Terephthalsäure metallorganischen Gerüstmaterial

Eine Probe des Gerüstmaterials aus Beispiel 1 wird für mehrere Stunden in einem Exsikkator mit 90% relativer Luftfeuchtigkeit gelagert. Die Probe wird anschließend ein einen Probetiegel gegeben und unter Luft mit 5 K/min aufgeheizt. Das Gewicht der Probe (Thermogravimetrie, TG) sowie die Wärmetönung von eventuellen Reaktionen (Differentielle Thermoanalyse, DTA), werden untersucht. Die desorbierten Produkte werden mittels IR identifiziert.

Es zeigt sich, dass Wasser sofort beginnt zu desorbieren. Das Maximum des endothermen Desorptionspeaks liegt bei ca. 95°C. Oberhalb von 150°C ist der größte Teil der zu desorbierenden Stoffe entfernt. Bei höheren Temperaturen ist der Massenverlust nur noch gering. Bis 250°C wird eine negative Massenänderung von 10,1 Gew.-% ermittelt.

### Beispiel 4 CO₂-Abtrennung mit einem Al-Terephthalat metallorganischen Gerüstmaterials

50 g des metallorganischen Gerüstmaterials aus Beispiel 1 werden zu 1.5 mm Extrudaten verformt und in einen Rohrreaktor gefüllt.

Die Formkörper werden mit einem trockenen N₂-Strom während 16 h bei 130°C von eventuell anhaftenden Wasser- bzw. CO-Resten befreit und aktiviert. Anschließend wird bei 40°C mit N₂ zunächst ein Druck von 10 bar aufgebaut und danach auf ein Gemisch von 10,5% CO₂ und 17% CO in N₂ umgestellt. Unter diesen Bedingungen wirkt der Formkörper als Sorptionsmittel und hält das CO₂ zunächst fest, so dass nur CO und N₂ den Reaktor verlassen (Detektion über Infrarotmessgerät). Erst wenn der MOF nach einigen Minuten vollständig mit CO₂ gesättigt ist und nichts mehr aufnehmen kann wird CO₂ im Ausgang detektiert. Aus der Zeitdauer bis zum Durchbruch kann die Aufnahmekapazität des Gerüstmaterials bestimmt werden. In diesem Fall errechnet sich eine CO₂-Aufnahmekapazität von 5,0 Gew.-%.

### Beispiel 5

Das Experiment aus Beispiel 4 wird wiederholt, wobei jedoch das MOF-Material, das zuvor unter Umgebungsbedingungen (relative Luftfeuchtigkeit ca. 90%) gelagert wurde, nicht aktiviert wird. Es wird sofort mit dem Druckaufbau begonnen. Der CO₂-Durchbruch erfolgt in diesem Experiment deutlich früher und es errechnet sich eine CO₂-Kapazität von lediglich 3,2 Gew.-% (Relativer Kapazitätsverlust im Vergleich zu Beispiel 4: ca. 35%).

## Patentansprüche

1. Verfahren zur Trennung einer Gaskomponente aus einem Gasgemisch, welches die Gaskomponehte enthält, die Schritte enthaltend
(a) Inkontaktbringen des Gasgemisches mit mindestens einem Sorbens enthaltend ein poröses metallorganisches Gerüstmaterial, wobei das Gerüstmaterial die Gaskomponente aufnimmt und mindestens eine an mindestens ein Metallion koordinativ gebundene, mindestens zweizähnige organische Verbindung enthält und
(b) Desorption der Gaskomponente,
wobei vor Schritt (a) das poröse metallorganische Gerüstmaterial durch Druckreduktion mit einem reduzierten Druck von 500 mbar oder weniger ohne Temperaturerhöhung aktiviert wird, wobei das Gasgemisch Erdgas ist und wobei die Zeitspanne zwischen dem Ende der Aktivierung und Schritt (a) weniger als 3 Stunden beträgt.

2. Verfahren nach Anspruch 1, **dadurch gekennzeichnet, dass** das metallorganische Gerüstmaterial zusätzlich in Gegenwart eines Spülgases aktiviert wird.

3. Verfahren nach Anspruch 1 oder 2, **dadurch gekennzeichnet, dass** die Aktivierung von 0,5 Stunden bis 5 Tagen dauert.

## Claims

1. A process for separating a gas component from a gas mixture comprising the gas component, which comprises the steps
(a) contacting of the gas mixture with at least one sorbent comprising a porous metal organic framework, with the framework taking up the gas component and comprising at least one at least bidentate organic compound coordinated to at least one metal ion, and
(b) desorption of the gas component,
wherein the porous metal organic framework is activated before step (a) by pressure reduction with a reduced pressure of 500 mbar or less without temperature increase, with the gas mixture being natural gas and with the time between the end of the activation and step (a) being less than 3 hours.

2. The process according to claim 1, wherein the metal organic framework is additionally activated in the presence of a flushing gas.

3. The process according to claim 1 or 2, wherein the activation lasts for from 0.5 hour to 5 days.

## Revendications

1. Procédé d'extraction d'un composant gazeux hors d'un mélange de gaz qui contient le composant gazeux, le procédé comportant les étapes qui consistent à :
(a) mettre le mélange de gaz en contact avec au moins un matériau organométallique poreux de support contenant un agent adsorbant, le matériau de support reprenant le composant gazeux et contenant au moins un composé organique au moins bivalent lié par coordination à un ion métallique et
b) désorber le composant gazeux,
et dans lequel avant l'étape (a), le matériau organométallique poreux de support est activé par réduction de pression jusqu'à une pression réduite de 500 mbars ou moins, sans augmentation de température, le mélange gazeux étant du gaz naturel et la durée s'étendant entre la fin de l'activation et l'étape (a) étant d'au moins 3 heures.

2. Procédé selon la revendication 1, **caractérisé en ce que** le matériau organométallique de support est de plus activé en présence d'un gaz de balayage.

3. Procédé selon les revendications 1 ou 2, **caractérisé en ce que** l'activation dure entre 0,5 heure et 5 jours.
